Europäisches Patentamt

European Patent Office

Office européen des brevets

(11) Publication number: **0 343 287**
**A1**

## (12) EUROPEAN PATENT APPLICATION

(21) Application number: **88201058.0**

(22) Date of filing: **25.05.88**

(51) Int. Cl.⁴: **A01G 9/14 , E04B 1/18**

(43) Date of publication of application:
**29.11.89 Bulletin 89/48**

(84) Designated Contracting States:
**BE DE ES FR NL**

(71) Applicant: **ALCOA NEDERLAND B.V.**
**Lipsstraat 40 P.O. Box 21**
**NL-5150 BA Drunen(NL)**

(72) Inventor: **Maaijwee, Ludovicus Cornelis**
**Willem Marisstraat 2**
**NL-5143 HH Waalwijk(NL)**

(74) Representative: **Baarslag, Aldert D. et al**
**Nederlandsch Octrooibureau**
**Scheveningseweg 82 P.O. Box 29720**
**NL-2502 LS 's-Gravenhage(NL)**

(54) **Glasshouse or greenhouse.**

(57) Glasshouse or greenhouse, comprising vertical posts (1,2) set up in parallel rows, running at right angles thereto parallel rows of horizontal beams (3), and above the parallel rows of beams (3) one or more roofs, each comprising a horizontal ridge (4,5), two sets of parallel rows of bars (6,7,8), and glass panes or the like, whereby the posts (1,2) are set up in the plane of the ridge (4,5) and extend from the ground to the ridge to which they are connected, and whereby the parallel bars (6,7,8) connected on one side to said ridge (4,5) are connected on the other side to the horizontal beams (3), so that rigid triangles are formed.

## Glasshouse or greenhouse

The invention relates to a glasshouse or greenhouse, comprising vertical posts set up in parallel rows, running at right angles thereto parallel rows of horizontal beams, and above the parallel rows of beams one or more roofs, each comprising a horizontal ridge, two sets of parallel rows of bars, and glass panes or the like carried by the bars.

Such a glasshouse or greenhouse is generally known in practice as the Venlo greenhouse. The posts are erected under the gutters between two adjacent roofs and under the gutters along the end edges of the glasshouse. The posts need not be placed under each gutter, but is is possible to have, for example, three roofs supported combined with each other by two rows of posts under the gutters along the outside edges of the first and of the third roof.

The ridge of each known roof is supported further by means of parallel sets of bars on the gutters and next to the roofs. The roofs themselves in this way contribute little or nothing to the rigidity of the building, which means that the distance between the rows of posts, thus the width of each roof and the number of roofs, may not be too great, in order to ensure that the glasshouse can withstand storms or the like.

As already mentioned, it is possible with the Venlo glasshouse to have, or example, three roofs supported by two rows of posts. A common width of each roof is then 3,200 mm, so that the distance between two rows of posts is 9,600 mm.

Three roofs means three gutters and three ridges on a span of 9,600 mm, which means a considerable loss of light, and thus less production for the user.

The object of the invention is to improve the known glasshouse or greenhouse in such a way that with a smaller number of roofs per span between two rows of posts or with a large span the same or greater strength and rigidity is obtained, with less loss of light and thus more production for the user.

This is achieved according to the invention in that the posts are set up in the plane of the ridge and extend from the ground to the ridge to which they are connected, and in that the sets of parallel bars connected on one side to said ridge are connected on the other side to the horizontal beams, so that rigid triangles are formed. In this way each ridge supported directly by a row of posts forms a rigid structural part. This means that with the same span between the rows of posts fewer roofs need be used, or with the same number of roofs a greater span is possible. This also means less loss of light per area to be planted, due to the fact that there are fewer gutters and fewer ridges. With the invention it is possible with a span of 9,600 mm to make do with two roofs measuring 4,800 mm, while with the conventional Venlo glasshouse a span of 9,600 mm requires three roofs.

It is pointed out that Dutch Patent Application 7006300 discloses a glasshouse in which the posts, as in the oase of the Venlo glasshouse, are erected under the gutters, and in which the roof construction consists of four roofs connected to form a rigid entity with beams above the ridges. In this way a great span is achieved, although it involves an expensive and heavy structure, with great loss of light, and thus production, for the user.

The beams are preferably of such length that they extend from post to post and are fixed to them by their ends.

At least one further roof, whose ridge is supported in the known manner via bars by the horizontal beams and/or gutters, is preferably provided between the two parallel roofs whose ridges are supported directly by posts.

If one intermediate roof is used, this means that each horizontal beam, apart from being fixed at each end to·the post, is supported one quarter and three quarters of the way along by the rigid triangles.

According to the invention, the beams are preferably shaped in such a way that they can serve as resting points for a horizontally running energy screen or shading screen.

It is pointed out that beams which extend along the ridges and which also serve to take an energy screen are known from Dutch Patent Application 8203853. These are, however, ·additional beams, while according to the invention beams which are necessary for the structure are used.

The invention will be explained in greater detail with reference to a schematic drawing, in which a front view of a glasshouse or greenhouse according to the invention is shown.

Two rows of posts fixed in the ground are indicated by 1 and 2.

A beam 3 is rigidly fixed between each two posts 1 and 2 of the rows. The end faces of the beam 3 are preferably rigidly connected to the posts 1 and 2.

The posts 1 and 2 run up beyond the beam 3 to a ridge 4 and 5, to which they are rigidly connected by means of gusset plates (not shown), bolt connections and the like.

Slanting truss bars 6, 7 and 8 run from the ridges 4 and 5 to the beam 3. These truss bars are also firmly connected to the ridges 4 and 5 and to the beam 3, and with the posts 1 and 2 and the beam 3 form rigid triangles which give the glasshouse rigidity, but they also serve to accommodate glass panes or the like in the known way.

One conventional roof, comprising a ridge 9 and glass bars 10 and 11, is provided between the rigid triangles 1, 6, 3 and 2, 7, 3.

Numbers 12, 13 and 14 indicate conventional rain gutters, in which the glass bars 10 and 11 rest with their bottom ends, to carry the ridge 9 in this way.

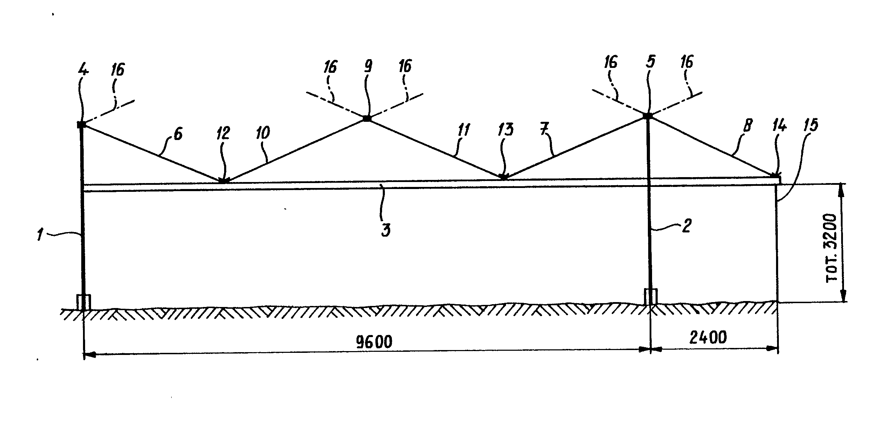

As can be seen from the drawing, each beam 3 is supported along one quarter and three quarters of its length. In the structure shown, with a span of 9,600 mm between the posts 1 and 2, there are thus two gutters 12 and 13, a ridge 9, and two half gutters 4 and 5. There are in fact only two roofs.

In a conventional greenhouse with the posts under the gutters and three roofs between the gutters there are three ridges and two gutters, and two half gutters.

The drawing shows on the right another short piece of beam, and also a vertical wall 15 for shutting off the glasshouse. The glasshouse can be continued if necessary to the right of the posts 2.

According to the invention, the beams 3 can be shaped in such a way that they can take the side edges of a rolled-up or folded-up energy or shading screen, (not shown), for example, in the same way as is shown in Dutch Patent Application 8203853.

Such a screen is used, for example, at night, so that the heat of the glasshouse does not disappear into the roofs.

Hinged windows 16, which can be opened against each other as shown in the drawing, can be disposed in all sides of the roofs near the ridges.

These windows can extend continuously over a large part of the length of the glasshouse, or can if desired consist of several separate units.

## Claims

1. Glasshouse or greenhouse, comprising vertical posts set up in parallel rows, running at right angles thereto parallel rows of horizontal beams, and above the parallel rows of beams one or more roofs, each comprising a horizontal ridge, two sets of parallel rows of bars, and glass panes or the like carried by the bars, **characterized in that** the posts are set up in the plane of the ridge and extend from the ground to the ridge to which they are connected, and in that the parallel bars connected on one side to said ridge are connected on the other side to the horizontal beams, so that rigid triangles are formed.

2. Glasshouse or greenhouse according to Claim 1, **characterized in that** the beams extend from post to post and are firmly connected to them by their ends.

3. Glasshouse or greenhouse according to Claim 1 or 2, **characterized in that** at least one further roof whose ridge is supported in the known manner via bars by the horizontal beams and/or gutters is provided between two parallel roofs whose ridges are supported directly by posts.

4. Glasshouse or greenhouse according to Claim 1, 2 or 3, **characterized in that** the beams are shaped in such a way that they can serve as a resting place for a horizontally running screen.

5. Glasshouse or greenhouse according to Claim 1, 2, 3 or 4, provided with windows which can be opened, **characterized in that** the latter can be continuous or separate, and can be opened opposite each other at each ridge.

EP 0 343 287 A1

# EUROPEAN SEARCH REPORT

Application Number

EP 88 20 1058

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| X | FR-A-1 310 752 (RHEEM-SAFIM S.p.A.)<br>* figure 1 *<br>--- | 1, 2 | A 01 G    9/14<br>E 04 B    1/18 |
| A | EP-A-0 038 680 (LOVE)<br>* page 6, line 1 - page 7, line 10; figure 1, 2 *<br>--- | 1 | |
| A | FR-A-2 214 398 (LE PROFIL)<br>* page 3, lines 9 - 40; figure 1 *<br>--- | 1 | |
| A | CH-A- 499 260 (TERLINDEN)<br>* figure 2 * & NL - A - 70 06300 (Cat. D, A)<br>--- | 1 | |
| A | EP-A-0 105 568 (PRINS N.V.)<br>* figures 1 - 2b, 13a * & NL - A - 82 03853<br>--- | 1, 5 | |
| E | NL-A-8 700 178 (ALCOA NEDERLAND B.V.)<br>* complete document *<br>----- | 1 - 5 | |
| | | | TECHNICAL FIELDS SEARCHED (Int. Cl.3) |
| | | | A 01 G    9/00<br>E 04 B    1/00 |

The present search report has been drawn up for all claims

| Place of search | Date of completion of the search | Examiner |
|---|---|---|
| BERLIN | 12-01-1989 | WUNDERLICH J E |